Europäisches Patentamt

European Patent Office

Office européen des brevets

(19)

(11) **EP 0 617 504 B1**

(12) **EUROPÄISCHE PATENTSCHRIFT**

(45) Veröffentlichungstag und Bekanntmachung des Hinweises auf die Patenterteilung:
**04.11.1998 Patentblatt 1998/45**

(51) Int Cl.⁶: **H02P 7/62**, G05D 13/62

(21) Anmeldenummer: **94250073.7**

(22) Anmeldetag: **24.03.1994**

(54) **Verfahren zur zeitdiskreten Regelung des Stromes eines über einen Wechselrichter gespeisten Asynchronmotors**

Discrete-time current control method of an inverter-fed asynchronous motor

Procédé de régulation à temps discret du courant d'un moteur asynchrone alimenté par onduleur

(84) Benannte Vertragsstaaten:
**DE FR GB IT**

(30) Priorität: **26.03.1993 DE 4310778**

(43) Veröffentlichungstag der Anmeldung:
**28.09.1994 Patentblatt 1994/39**

(73) Patentinhaber: **Daimler-Benz Aktiengesellschaft 70567 Stuttgart (DE)**

(72) Erfinder: **Böcker, Joachim, Dr.-Ing. D-12247 Berlin (DE)**

(56) Entgegenhaltungen:
**DE-C- 4 129 261          US-A- 5 057 759**

- **JOURNAL DE PHYSIQUE, Bd. 2, Nr. 3, März 1992, PARIS FR, Seiten 439 - 453 X. ROBOAM ET AL. 'Contrôle d'une machine asynchrone par estimation robuste de la vitesse'**

**Beschreibung**

Die Erfindung bezieht sich auf ein Verfahren gemäß dem Oberbegriff des Anspruchs 1.

Mikroprozessor-Regelungen arbeiten prinzipiell abtastend. d. h. zeitdiskret, wodurch sie sich wesentlich von in Analogtechnik realisierten Regelungen unterscheiden. Prinzipiell sollte daher die zeitdiskrete Arbeitsweise des Mikroprozessors schon beim Reglerentwurf berücksichtigt werden.

Um eine zeitdiskrete Regelung entwerfen zu können, benötigt man zunächst ein zeitdiskretes Modell der hier zeitkontinuierlichen Regelstrecke. Dieses zeitdiskrete Modell erhält man durch Diskretisierung aus den zeitkontinuierlichen Differentialgleichungen:

Geht man vom läuferstreuungsfreien Modell des Asynchronmotors aus (d.h. die Läuferstreuung der Maschine ist auf die Ständerseite transformiert), lauten die aus der Ständerspannungsgleichung abgeleitete Strom-Differentialgleichung

$$\dot{i}_S^B(t) = -\left(j\omega_{BS} + \frac{R_S + R_R}{L_\sigma}\right) i_S^B(t) - \frac{1}{L_\sigma}\left(j\omega_{RS} - \frac{R_R}{L_R}\right)\psi_R^B(t) + \frac{1}{L_\sigma} u_S^B(t) \quad (1)$$

sowie die Läuferfluß-Differentialgleichung

$$\dot{\psi}_R^B(t) = \left(j\omega_{RB}(t) - \frac{R_R}{L_R}\right)\psi_R^B(t) + R_R\, i_S^B(t) \quad (2)$$

Hierin bedeuten $R_S$ der Ständerwiderstand, $R_R$ der Läuferwiderstand, $L_\sigma$ die Streuinduktivität sowie (von der Zeit t abhängig)$\Psi$R der Läuferfluß, $i_S$ der Ständerstrom und $u_S$ die Ständerspannung des Asynchronmotors. Der hochgestellte Index B bezeichnet das Bezugssystem der komplexen Zeiger $u_S$, i $_S$.$\Psi$R. $\omega_{RS}$ ist die Winkelgeschwindigkeit der gewählten Bezugssystems B gegenüber dem Ständer, $\omega_{RB}$ diejenige des Läufers gegenüber dem Bezugssystem B und $\omega_{RS}$ diejenige des Läufers gegenüber dem Ständer. Alle Winkelgeschwindigkeiten beziehen sich jeweils auf die elektrische Größe; zur Bildung der mechanischen Winkelgeschwindigkeit ist die Polpaarzahl zu berücksichtigen.

Das Bezugssystem kann z. B. ständerfest sein (B = S) oder mit dem Läufer (B = R) oder mit dem Läuferfluß (B = $\Psi$) rotieren.

Obwohl die Gleichungen (1) und (2) ein System gekoppelter Differentialgleichungen bilden. kann für die Auslegung eines Stromreglers, bei der Zeitkonstanten in der Größenordnung der Streuzeitkonstanten maßgeblich sind, der nur langsam veränderliche Betrag des Läuferflußes $\Psi_R$ als konstant angenommen werden. Die Stromdynamik wird dann allein durch die Ständerspannungsgleichung (1) beschrieben, bei der der Läuferfluß als äußere konstante bzw. langsam veränderliche Störgröße auftritt.

Zur Aufstellung eines zeitdiskreten Modells der Strecke des Ständerkreises nach Gleichung (1) wird von der ständerbezogenen Gleichung (d. h. B = S) ausgegangen.

$$\dot{i}_S^S(t) = \frac{R_S + R_R}{L_\sigma} i_S^S(t) - \frac{1}{L_\sigma}\left(j\omega_{RS}(t) - \frac{R_R}{L_R}\right)\psi_R^S(t) + \frac{1}{L_\sigma} u_S^S(t) \quad (3)$$

Da $u_S^S$ (t) wie $\Psi_R^S$ (t) als äußere unabhängige Eingangs- bzw. Störgröße aufgefaßt werden sollen. liegt mit der Zeitkonstanten

$$\tau_\sigma := \frac{L_\sigma}{R_S + R_R}, \quad (4)$$

der Eingangsgröße $u_S^S$ (t) und der Störgröße

$$e(t) := -\left(j\omega_{RS}(t) - \frac{R_R}{L_R}\right)\psi_R^s(t) \tag{5}$$

die Struktur eines Verzögerungsglieds 1. Ordnung vor

$$i_s^s(t) = -\frac{1}{\tau_\sigma}i_s^s(t) + \frac{1}{L_\sigma}u_s^s(t) + \frac{1}{L_\sigma}e_s^s(t) \tag{6}$$

Mit der Transitionsfunktion

$$\Phi(t) = \exp(-\frac{t}{\tau_\sigma}) \tag{7}$$

dieser Differentialgleichung läßt sich deren exakte Diskretisierung angeben (vgl. z. B. Föllinger. O. "Lineare Abtastsysteme" Oldenburg Verlag. München. 1974 , S.280 ff).

Mit den Abkürzungen

$$i_s^s(T_{k+1}) = \Phi(T_{k+1}-T_k)\, i_s^s(T_k) + \frac{1}{L_\sigma}\int_{T_k}^{T_{k+1}} \Phi(T_{k+1}-t)\left(u_s^s(t) + e_s^s(t)\right)dt \tag{8}$$

$$i_s^s(T_{k+1}) = \exp\left(-\frac{T_{k+1}-T_k}{\tau_\sigma}\right)i_s^s(T_k) + \frac{1}{L_\sigma}\int_{T_k}^{T_{k+1}}\exp\left(-\frac{T_{k+1}-t}{\tau_\sigma}\right)\left(u_s^s(t) + e_s^s(t)\right)dt \quad, \tag{9}$$

$$\eta(k) := \frac{T_{k+1} - T_k}{L_\sigma} \quad, \quad \rho(k) := \exp\left(-\frac{T_{k+1}-T_k}{\tau_\sigma}\right) \quad, \tag{10}$$

$$= \exp\left(-\left(T_{k+1} - T_k\right)\frac{R_S + R_R}{L_\sigma}\right)$$

$$\overline{u}_s^s(k) := \frac{1}{T_{k+1}-T_k}\int_{T_k}^{T_{k+1}}\exp\left(-\frac{T_{k+1}-t}{\tau_\sigma}\right)u_s^s(t)\,dt \quad, \tag{11}$$

$$\overline{e}_s^s(k) := \frac{1}{T_{k+1}-T_k}\int_{T_k}^{T_{k+1}}\exp\left(-\frac{T_{k+1}-t}{\tau_\sigma}\right)e_s^s(t)\,dt \tag{12}$$

ergibt sich das zeitdiskrete Modell des Ständerkreises mit $i_s^s(k) = i_s^s(T_k)$ als

$$i_s{}^s(k+1) = \rho(k)\, i_s{}^s(k) + \eta(k)\, \overline{u}_S^S(k) + \eta(k)\, \overline{e}_S^S(k) \tag{13}$$

In diesem Modell treten also der Ständerstrom $i_S^S(k)$ zu den jeweiligen Abtastzeitpunkten als Zustandsgröße und $\overline{u}_S^S(k)$ und $\overline{e}_S^S(k)$ als zeitdiskrete Eingangsgröße auf. Während $u_S^S(k)$ aus der äußeren Spannung $u_S^S(t)$ herrührt und die Stellgröße des zeitdiskreten Modells darstellt, ist $\overline{e}_S^S(k)$ entsprechend der Herkunft aus einer inneren Gegenspannung bezüglich des Ständerstromkreises von der Bedeutung her eine Störgröße.

Für den Entwurf der Stromregelung in läuferfluß-bezogenen Komponenten ist es sinnvoll, auch das Streckenmodell läuferflußbezogen zur Verfügung zu stellen. Ein beliebiger komplexer Zeiger x wird durch die Drehtransformation

$$x^\Psi = x^s \exp(-j\varphi_{\Psi s}) \tag{14}$$

vom Ständersystem in das Flußsystem transformiert, welches durch das hochgestellte $\Psi$ gekennzeichnet wird. Die Größe $\varphi_{\Psi S}$ gibt den vom ruhenden Ständersystem aus vermessenen Winkel des komplexen Flußzeigers an. Bei der Transformation der Gleichung (14) in das Flußsystem ist zu beachten, daß die Flußrichtung zum Zeitpunkt $t = T_k$ eine andere als zum Zeitpunkt $t = T_{K+1}$ ist. Es ergibt sich:

$$i_S^\Psi(k+1)\, \exp\!\big(j\varphi_{\Psi s}(k+1)\big) = \Big[\rho(k)\, i_S^\Psi(k) + \eta(k)\, \overline{u}_S^\Psi(k) + \eta(k)\, \overline{e}_S^\Psi(k)\Big]\exp\!\big(j\varphi_{\Psi s}(k)\big) \tag{15}$$

$$i_S^\Psi(k+1) = \rho(k)\,\gamma(k)\, i_S^\Psi(k) + \eta(k)\,\gamma(k)\, \overline{u}_S^\Psi(k) + \eta(k)\,\gamma(k)\overline{e}_S^\Psi(k) \tag{16}$$

mit der Abkürzung

$$\gamma(k) := \exp\!\Big(-j\,\big(\varphi_{\Psi s}(k+1) - \varphi_{\Psi s}(k)\big)\Big) = \exp\!\Big(-j\,\Delta\varphi_{\Psi s}(k)\Big) \tag{17}$$

Anschaulich gibt $\gamma(k)$ die Drehung des Flußzeigers während des Abtastintervalls $(T_k, T_{k+1})$ an.

Zum besseren Verständnis der vorherigen Ausführungen und des weiter unten erläuterten Verfahrens nach der Erfindung wird zusätzlich auf die Zeichnung verwiesen.

Es zeigen

Fig. 1     die Struktur des Stromregelkreises in Flußorientierung,

Fig. 2     den in Fig. 1 dargestellten Stromregelkreis im Bildbereich der z-Transformation,

Fig. 3     die Struktur des Stromregelkreises in Flußorientierung zur Vermeidung von stationären Regelfehlern aufgrund von Prädiktionsfehlern.

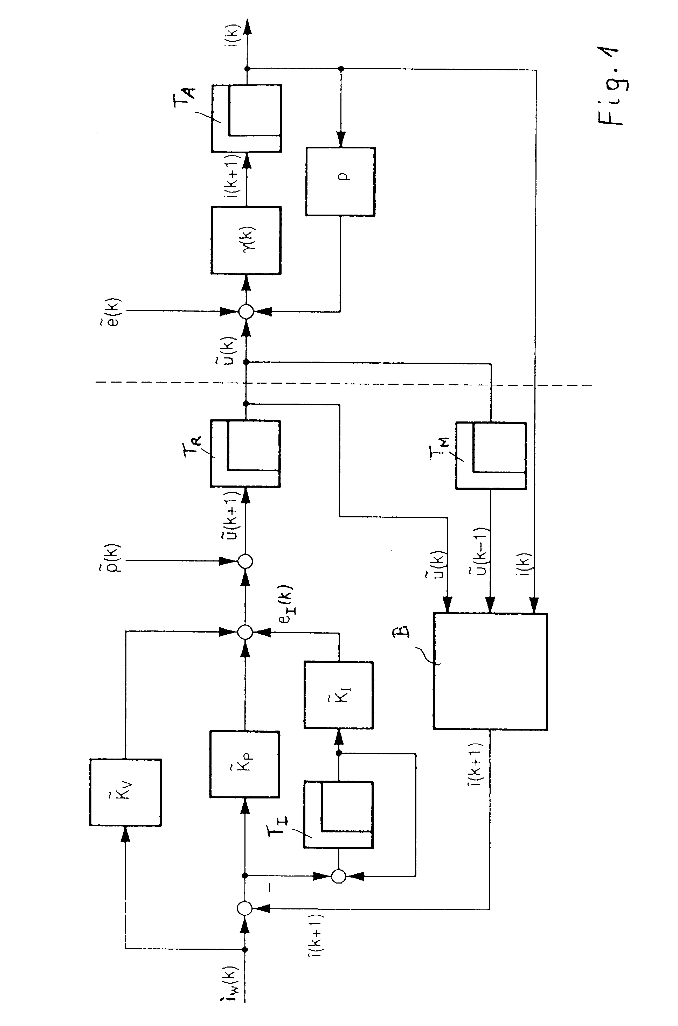

In Fig. 1 ist ein Strukturbild bestehend aus dem abgeleiteten zeitdiskreten Modell (wobei die zeitdiskrete Modellierung durch das Totzeitglied $T_A$ zum Ausdruck kommt) rechts der gestrichelten Linie zusammen mit einem Regler und einem Flußbeobachter B links der gestrichelten Linie dargestellt. Beim Vergleich der Teilstruktur der Regelstrecke mit der Gleichung (17) ist zu beachten, daß in Fig. 1 auf die normierten Größen

$$\widetilde{u}(k) \doteq \eta\, \overline{u}(k) \tag{18}$$

$$\widetilde{e}(k) \doteq \eta\, \overline{e}(k) \tag{19}$$

übergegangen wurde. Dies hat im wesentlichen den Sinn, daß der folgende Reglerentwurf unabhängig vom Motorparameter $L_\sigma$ wird. Weitere Normierungen sind nicht erforderlich. Aus Gründen der Übersichtlichkeit soll hier auf die Indizes $_{S,\Psi}$ verzichtet werden, da im folgenden keine Verwechslungsgefahr besteht.

Die Auflösung der Gleichungen (18) und (19) nach $\overline{u}$ und $\overline{e}$ ergibt unter Einsetzen der Gleichung (10) für $\eta$ :

$$\overline{u}(k) = \frac{L_{\sigma}}{T_{k+1} - T_k} \cdot \widetilde{u}(k) \qquad (18a)$$

$$\overline{e}(k) = \frac{L_{\sigma}}{T_{k+1} - T_k} \cdot \widetilde{e}(k) \qquad (19a)$$

Der Regler ist als PI-Glied mit den Parametern $\widetilde{\kappa}_P$, $\widetilde{\kappa}_I$ als Proportional- und als Integralverstärkung angesetzt. Darüber hinaus ist eine Sollwert-Vorsteuerung über $\widetilde{\kappa}_V$ und eine Größe $\widetilde{p}$(k) zur Störgrößenkompensation vorgesehen. (Da der Regler mit der normierten Stellgröße $\widetilde{u}$ dargestellt ist, tragen auch die Reglerparameter die Tilde ~.)

Mit Hilfe des Totzeitglieds $T_I$ wird der Integralanteil des zeitdiskreten Reglers als Summierer realisiert.

Bei einem derartigen Reglerentwurf müssen die Parameter $\widetilde{K}_P$, $\widetilde{K}_I$, $\widetilde{K}_V$, die jeweils komplex sind und daher 6 reellen Parametern entsprechen; und die Störgrößenkompensation $\widetilde{p}$ (k) festgelegt werden.

Die Strukturelemente des Reglers können den Eindruck erwecken. als wäre etwa über die proportionalen Verstärkungen eine verzögerungslose Wirkung möglich. In der Realität benötigt ein Mikroprozessor für die Abarbeitung des Regelalgorithmus aber eine gewisse Zeitspanne. Daher ist am Ausgang der Reglerstruktur mit einem Element $T_R$ eine Verzögerung von einem Abtastschritt dargestellt, die derartige Rechentotzeiten zusammenfaßt. Natürlich wird die benötigte Rechenzeit nicht exakt einem Abtastschritt entsprechen. Die Zeit eines Abtastschrittes wird vielmehr als obere Grenze der benötigten Rechenzeit angenommen. Auch wenn diese Zeitspanne nur teilweise als Rechenzeit in Anspruch genommen wird, ist es aus Gesichtspunkten abtastender Regelungen häufig günstig, die Totzeit zu einem ganzen Abtastschritt aufzurunden und so eine zeitgleiche Meßwerterfassung und Stellgrößenausgabe zu erreichen. Demgemäß ist die Meßtotzeit durch ein Element $T_M$ berücksichtigt.

Regelungstechnisch sind solche Totzeiten jedoch unerwünscht, da sich diese im allgemeinen stabilitätsmindernd auswirken. Die Totzeit von einem Schritt kann jedoch durch einen Prädiktor im Flußbeobachter B kompensiert werden, der einen Schritt vorauseilende Schätzwerte der zukünftigen Meßwerte liefert. Ein derartiger Prädiktor ist z. B. in der DE 41 29 261 C 1 für einen Einsatz bei einem 4 Quadrantensteller beschrieben. In bezug auf die Auslegung des Reglers soll hier davon ausgegangen werden , daß die prädizierten Ströme î den gemessenen gleichen:

$$\hat{\imath}(k) = i(k) \qquad (20)$$

Neue Seiten 7, 7a, 7b (ersetzen ursprünglich eingereichte Seite 7)

Der Sollwert $i_w(k)$ kann natürlich nicht prädiziert werden. Sollwert, Ist- bzw. Prädiktionswert sind wieder komplexe Größen, die aus zwei Komponenten bestehen.

Ein Stellglied, nämlich der mit dem Asynchronmotor verbundene Wechselrichter, ist in Fig. 1 nicht dargestellt. Es wird hier davon ausgegangen, daß ein derartiges Stellglied zusammen mit einer geeigneten Steuerungseinrichtung (zum Beispiel einem Pulsmustergenerator) die gewünschte Stellgröße $\overline{u}$ tatsächlich erzeugen kann.

Der in Fig. 1 dargestellten Reglerstruktur entsprechen die rekursiven Gleichungen

$$\widetilde{u}(k-1) = \widetilde{K}_V(k)\, i_w(k) + \widetilde{K}_P(k)\, (i_w(k) - \hat{\imath}(k+1)) + e_I(k) + \widetilde{p}(k), \qquad (20a)$$

$$e_I(k+1) = e_I(k) + \widetilde{K}_I(i_w(k) - \hat{\imath}(k+1)) \qquad (20b)$$

Der Integralanteil des Reglers wird durch die Hilfsgröße $e_I$ repräsentiert. Die Größe $i_w$ ist der Strom-Sollwert, î ist ein Schätz- oder Prädiktionswert des Strom-Istwerts. Beide Größen setzen sich jeweils aus den zwei Komponenten (eines komplexen) Zeigers zusammen.

Die zeitdiskreten Gleichungen (20a), (20b) können in der dargestellten rekursiven Form auf einem Rechner als Reglergesetz realisiert werden.

Der Entwurf für den Regler erfolgt vorteilhafterweise im z-Bereich. Möglicherweise ungewohnt ist die Anwendung der z-Transformation auf komplexwertige Größen des Zeitbereichs, obwohl hierzu keine Einschränkungen bestehen. Die gewohnte Eigenschaft, daß die z-Transformierten reellwertiger Größen bezüglich z konjugiert komplex sind, ist im Fall komplexwertiger Größen des Zeitbereichs allerdings nicht mehr vorhanden. (Vgl. Böcker, J.; Hartmann, I; Zwanzig, C. "Nichtlinerare und adaptive Regelungssysteme", Springer-Verlag, Berlin, 1986, Seite 453 ff).

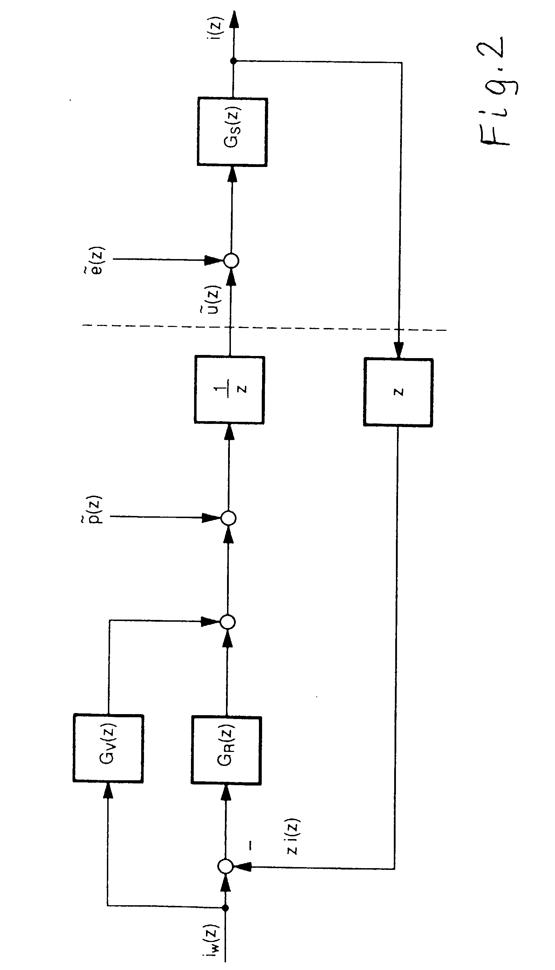

Für die Anwendung der z-Transformation auf die Gleichungen (16), (20a), (20b) von Strecke und Regler ist es notwendig, die Größen $\gamma(k)$ nach der Gleichung (17) und $\rho(k)$, $\eta(k)$ nach der Gleichung (10) sowie die Reglerparameter $\tilde{k}_{\tilde{P}}(k)$, $\tilde{k}_I(k)$, $\tilde{k}_V(k)$ der Reglergleichungen als zumindest abschnittweise konstant anzunehmen. Dann kann das Strukturbild gemäß Fig. 1 in eine Struktur von Übertragungsfunktionen überführt werden, die in Fig. 2 dargestellt ist. Das heißt Fig. 2 zeigt den Stromregelkreis im Bildbereich der z-Transformation, wobei der Beobachter B mit dem Prädiktor zusammen mit der Beziehung (20) durch eine Multiplikation mit z ersetzt wurde.

Aus den Gleichungen (16), (18), (19) folgt durch Anwendung der z-Transformation das Übertragungsverhalten der Strecke

$$ i(z) = G_S(z) \; (\tilde{u}(z) + \tilde{e}(z)) \qquad (21) $$

mit der Strecken-Übertragungsfunktion

$$ G_s(z) = \frac{\gamma}{z - \gamma p} \qquad (21a) $$

Aus den Reglergleichungen (20a), (20b) und der Prädiktionsgleichung (20) ergibt sich durch z-Transformation

$$ z\tilde{u}(z) = G_R(z) \; (i_w(z) - zi(z)) + G_V(z) \; i_w(z) + \tilde{p}(z) \qquad (22) $$

mit der Regler- und der Vorsteuerungs-Übertragungsfunktion

$$ G_R(z) = \tilde{K}_P + \tilde{K}_I \; \frac{1}{z-1} \qquad (23) $$

$$ G_V(z) = \tilde{K}_V \qquad (23a) $$

Hiermit folgt für den Regelkreis durch Einsetzen

$$ i(z) = G_S(z) \; (\tilde{u}(z) + \tilde{e}(z)) $$

$$ = G_S(z) \frac{1}{z} \left( \tilde{p}(z) + G_V(z) i_w(z) + G_R(z)(i_w(z) - zi(z)) \right) + G_S(z)\tilde{e}(z) \qquad (24) $$

$$ i(z) \left( 1 + G_S(z) \; G_R(z) \right) = \frac{1}{z} \; G_S(z) \left( G_R(z) + G_V(z) \right) i_w(z) + G_S(z) \left( \tilde{e}(z) + \frac{1}{z} \; \tilde{p}(z) \right) \qquad (25) $$

$$i(z) = T_w(z)\, i_w(z) + T_e(z) \left( \bar{e}(z) + \frac{1}{z}\, \bar{p}(z) \right) \qquad (26)$$

mit der Führungsübertragungsfunktion

$$T_w(z) = \frac{G_S(z)\, (G_R(z) + G_v(z))}{z\, (1 + G_S(z)\, G_R(z))} = \frac{\gamma\, (\bar{K}_V + \bar{K}_P)\, (z-1) + \bar{K}_I}{z\, \left( (z-1)\,(z-\gamma p) + \gamma\, (\bar{K}_P\, (z-1) + \bar{K}_I) \right)}$$

$$= \frac{z\gamma\, (\bar{K}_V + \bar{K}_P) + \gamma\, (\bar{K}_I - \bar{K}_P - \bar{K}_v)}{z\, \left( z^2 - z\, (1 + \gamma p - \gamma \bar{K}_P) + \gamma p - \gamma \bar{K}_P + \gamma \bar{K}_I \right)} \qquad (27)$$

und der Störübertragungsfunktion

$$T_e(z) = \frac{G_S(z)}{1 + G_S(z)\, G_R(z)} = \frac{\gamma\, (z-1)}{(z-1)\,(z-\gamma p) + \gamma\, (\bar{K}_P\, (z-1) + \bar{K}_I)} \qquad (28)$$

$$= \frac{z\gamma - \gamma}{z^2 - z\, (1 + \gamma p - \gamma \bar{K}_P) + \gamma p - \gamma \bar{K}_P + \gamma \bar{K}_I} \;.$$

Aufgabe der Erfindung ist es, ein Verfahren der eingangs angegebenen Art derart auszugestalten. daß die für die Regelung benötigten Parameter auf ein Minimum reduziert werden sowie einfach einstellbar sind und dabei eine Entkoppelung der beiden flußbezogenen Stromkomponenten, die den Real- und Imaginärteil des komplexen Zeigers $i(k)$ bilden, erfolgt.

Diese Aufgabe wird gemäß der Erfindung durch die im Anspruch 1 gekennzeichneten Merkmale gelöst.

Dabei geht die Erfindung von der Erkenntnis aus. daß eine Entkopplung genau dann vorliegt, wenn der Realteil von $i_w(k)$ nur auf den Realteil von $i(k)$ wirkt, sowie das entsprechende für die imaginären Komponenten gilt. Dies ist hier genau dann der Fall. wenn die Übertragungsfunktionen $T_w(z)$, die $i_w(z)$ auf $i(z)$ abbildet. eine reelle Funktion ist, d. h. die Koeffizienten von Zähler- und Nennerpolynom von $T_w(z)$ müssen reell sein. (Offensichtlich ist die spannungsgesteuerte Strecke $G_S(z)$ verkoppelt, was durch deren komplexen Pol bei $\gamma p$ zum Ausdruck kommt.) Die Entkopplungsbedingung an $T_w(z)$ führt also bei den Zähler-Koeffizienten zu (vgl. Gleichung (27));

$$\gamma(\bar{K}_V + \bar{K}_P)\,, \quad \gamma K_I \;\in\; \mathbb{R} \qquad (29)$$

und bei den Nenner-Koeffizienten zu

$$\gamma(p - \bar{K}_P)\,, \quad \gamma \bar{K}_I \;\in\; \mathbb{R} \;. \qquad (30)$$

Die Reglerparameter haben demnach die Form

$$\bar{K}_I = \gamma^{-1}\, K_I'\,, \qquad (31)$$

$$\bar{K}_P = \rho + \gamma^{-1} K_P' \quad, \tag{32}$$

$$\bar{K}_V = -\rho + \gamma^{-1} K_V' \tag{33}$$

wobei $K_P'$, $K_V'$, $K_I'$ gemäß der Erfindung reelle Größen sind, damit eine Entkopplung erreicht wird. Nach dem Einsetzen dieser Entkopplungsbedingungen lauten die Beziehungen für die Übertragungsfunktion $T_w$ und die Störübertragungsfunktion $T_e$ dann:

$$T_w(z) = \frac{(z-1)(K_V'+K_P') + K_I'}{z\left((z-1)(z+K_P') + K_I'\right)} = \frac{z(K_P'+K_V') + K_I' - K_P' - K_V'}{z\left(z^2 + z(K_P'-1) + K_I' - K_P'\right)} \tag{34}$$

$$T_e(z) = \frac{\gamma(z-1)}{(z-1)(z+K_P') + K_I'} = \frac{\gamma z - \gamma}{z_2 + z(K_P'-1) + K_I' - K_P'} \tag{35}$$

Über die Forderung der Entkopplung sind vorteilhafterweise die ursprünglich 6 reellen Parameter der komplexen Größe $\bar{K}_P$, $\bar{K}_I$, $\bar{K}_V$ auf nur noch 3 freie reelle Parameter $K'_P$, $K'_I$, $K'_V$ reduziert worden. Diese können im folgenden nach anderen Gesichtspunkten festgelegt werden; die Entkopplung ist aber stets gewährleistet.

Vorteilhafte Ausgestaltungen des Verfahrens nach der Erfindung, insbesondere auch zur Bestimmung der drei Parameter, sind in den übrigen Ansprüchen gekennzeichnet.

Integrale Anteile in Reglern gewährleisten - sofern die Stabilität des Regelkreises gesichert ist - stets einen stationären Regelfehler gleich null. Ohne Integralanteil läßt sich ein verschwindender Regelfehler nur unter idealen Kenntnissen der Struktur und der Parameter der Strecke und der Störgrößen einstellen.

Der Vorteil des Verzichts auf einen Integralanteil ist jedoch die geringe Ordnung des Gesamtsystems (2 reelle zusätzliche Zustandsgrößen im Regler werden vermieden), wodurch der Regelkreis - insbesondere im Fall von Stellgrößenbeschränkungen - meist ein robusteres Verhalten zeigt. Sind darüber hinaus in überlagerten Regelungen (Flußregelung und Drehmoment-bzw. Drehzahlregelung) Integralanteile enthalten, stellen stationäre Regelfehler im unterlagerten Kreis keine schwerwiegenden Nachteile dar, da diese durch die überlagerten Integralanteile ausgeglichen werden.

Wird der Integralanteil mit

$$K_I' = 0 \tag{36}$$

abgeschaltet, vereinfacht sich die Führungsübertragungsfunktion nach der Beziehung (34) zu

$$T_w(z) = \frac{K_V' + K_P'}{z(z + K_P')} \tag{37}$$

sowie die Störübertragungsfunktion nach der Beziehung (35) zu

$$T_e(z) = \frac{\gamma}{z + K_P'} \tag{38}$$

Beim Reglerentwurf kann jetzt noch über die verbleibenden beiden reellen Parameter $K'_P$ und $K'_V$ sowie über die Störgrößenkompensation $\widetilde{p}$ (k) verfügt werden.

Soll der Regelfehler (im Idealfall) verschwinden, muß für das stationäre Verhalten (d. h. im z-Bereich an der Stelle $z = 1$) gelten:

$$i(1) = i_w(1), \tag{39}$$

Nach Gleichung (26) führt dies zum einen zu der Forderung

$$T_w(1) = 1 \tag{40}$$

und nach Gleichung (37) weiter zu

$$K_V^{'} = 1. \tag{41}$$

Zum anderen führt die Voraussetzung (39) zusammen mit der Ausbildung des Stromregelkreises gemäß Gleichung (26), weil

$$T_e(1) \neq 0 \tag{42}$$

ist, zu der stationären Forderung an die Störgrößenkompensation

$$\tilde{p}(1) = -\tilde{e}(1) \quad . \tag{43}$$

Um eine dynamische Störgrößenkompensation zu erreichen, muß darüber hinaus

$$\tilde{p}(z) = -z \, \tilde{e}(z) \tag{44}$$

gefordert werden. Ein prädizierender Flußbeobachter für die Asynchronmaschine kann die eigentliche nicht-kausale Größe $z\tilde{e}(z)$ als Prädiktionswert zur Verfügung stellen.

Neben der Störgrößenkompensation sind bis auf $K'_P$ auch alle Reglerparameter festgelegt. Die Führungsübertragungsfunktion (37) und die Störübertragungsfunktion (38) lauten nun mit der Forderung nach (41) für einen Regler ohne Integralanteil;

$$T_w(z) = \frac{1 - \alpha_1}{z(z - \alpha_1)} \tag{45}$$

$$T_e(z) = \frac{\gamma}{z - \alpha_1} \tag{46}$$

wobei die Polstelle $\alpha_1$ durch den noch freien Parameter

$$K_P^{'} = -\alpha_1 \tag{47}$$

festgelegt wird.

Eine Polstelle der Führungsübertragungsfunktion liegt bei $z = 0$.

Sie ergibt sich aus der Rechentotzeit von einem Schritt und ist durch die Wahl der Reglerparameter nicht zu beinflussen.

Die zweite Polstelle $z = \alpha_1$ charakterisiert unmittelbar anschaulich das Verhalten des geschlossenen Regelkreises.

Der Wert von $\alpha_1$ gibt an, auf welchen Anteil ein anfänglicher Regelfehler, der durch einen Führungssprung verursacht wird, im nächsten Schritt (nach dem ersten Schritt Rechentotzeit) reduziert wird. Die Wahl von $\alpha_1 = 0$ entspricht Dead-Beat-Verhalten: Der Regelfehler wird nach dem ersten Schritt Rechentotzeit in einem zweiten Schritt vollständig ausgeregelt. Ein Dead-Beat-Regler führt jedoch in der Praxis häufig zu einem unruhigen Regelverhalten. Ein Wert von $\alpha_1 = 0.2 \ldots \ldots 0.3$ ist in Ausgestaltung der Erfindung hier als sinnvolle Vorgabe anzusehen. Der Regelfehler wird also jeweils von Schritt zu Schritt auf 20 % .... 30 % des Vorwertes reduziert.

Der Pol $z = \alpha_1$ ist im gleichen Maße für die Dynamik der Störübertragungsfunktion verantwortlich, wie der Gleichung (46) zu entnehmen ist.

Treten Abweichungen zwischen angenommenem und tatsächlichem System in der Struktur oder in den Parametern auf, kann auch mit Vorsteuerung und Störgrößenkompensation ein stationäres Führungsverhalten von 1 und ein verschwindender Regelfehler nicht erreicht werden. Wird auf stationäre Genauigkeit Wert gelegt, muß ein Integralanteil bei der Regelung vorgesehen werden.

In diesem Fall könnte beim Vorhandensein eines integralen Anteils bezüglich des stationären Verhaltens auf die Störgrößenkompensation an sich verzichtet werden. Es ist jedoch zu beachten. daß die Störgröße (die innere Gegenspannung des Motors) sich im wesentlichen proportional zur Drehfrequenz verhält, wodurch beim Verzicht auf deren Kompensation sich der Integralanteil bei einer Drehzahländerung jeweils dieser anpassen müßte, wodurch ein Einschwingvorgang des gesamten Regelkreises angestoßen wird. Zweckmäßigerweise wird man daher die Kompensation entsprechend der Beziehung (44) beibehalten.

Die Vorsteuerung ist ebenfalls nicht mehr zur Vermeidung von stationären Regelfehlern notwendig; zur dynamischen Entkopplung ist sie wie in Gleichung (33) jedoch weiter notwendig. Da für $z = 1$ die Bedingung

$$T_w(1) = 1 \qquad (48)$$

aufgrund des Integralanteils $K'_I \neq 0$ für jede (stabile) Wahl der Reglerparameter erfüllt ist, kann der jetzt freie Parameter $K'_V$ zusätzlich zur Beeinflussung der Dynamik des Führungsverhaltens verwendet werden.

Zur Dimensionierung der Parameter $K'_P$, $K'_I$, $K'_V$ ist es zweckmäßig, auf Darstellungen von $T_w(z)$ und $T_e(z)$ mit Pol- und Nullstellen überzugehen, d. h. für einen Regler mit Integralanteil lauten die Beziehungen für die Übertragungsfunktion $T_w$ und die Störübertragungsfunktion $T_e$ :

$$T_w(z) = V_w \frac{z - \beta_1}{z(z - \alpha_1)(z - \alpha_2)} \qquad (49)$$

$$T_e(z) = V_e \frac{z - 1}{(z - \alpha_1)(z - \alpha_2)} \qquad (50)$$

Die aus der Rechentotzeit herrührende Polstelle $z = 0$ tritt auch hier in der Führungsübertragungsfunktion auf. Durch Koeffizientenvergleich der Gleichungen (49) und (50) mit den Gleichungen (34) und (35) lassen die erforderlichen Zusammenhänge zwischen $\alpha_1$, $\alpha_2$, $\beta_1$, $V_w$, $V_e$ und den Parametern $K'_P$. $K'_I$ . $K'_V$ herstellen:

$$\alpha_1 \, \alpha_2 = K'_I - K'_P, \qquad (51)$$

$$\alpha_1 + \alpha_2 = 1 - K'_P, \qquad (52)$$

$$\beta_1 = 1 - \frac{K'_I}{K'_V + K'_P}, \qquad (53)$$

$$V_w = K'_V + K'_P, \qquad (54)$$

$$V_e = \gamma. \tag{55}$$

Durch Auflösen ergibt sich

$$K_P' = 1 - \alpha_1 - \alpha_2, \tag{56}$$

$$K_I' = (1 - \alpha_1)(1 - \alpha_2), \tag{57}$$

$$K_V' = \frac{(1-\alpha_1)(1-\alpha_2)}{1-\beta_1} + \alpha_1 + \alpha_2 - 1. \tag{58}$$

Eine vorteilhafte Reglerdimensionierung ergibt sich aus der Festlegung

$$\alpha_2 = \beta_1. \tag{59}$$

Dann kürzt sich in der Führungsübertragungsfunktion $T_w(z)$ eine Polstelle mit der Nullstelle und es resultiert

$$T_w(z) = \frac{1-\alpha_1}{z(z-\alpha_1)}. \tag{60}$$

Es ergibt sich also ein Verhalten eines Verzögerungsglieds 1. Ordnung mit einem Schritt Totzeit, welches bei sprungförmigen Sollwertänderungen nicht überschwingt. Damit liegt das gleiche Führungsverhalten wie beim Reglerentwurf ohne Integralanteil vor (vgl. Gleichung (45).).

Für die Wahl von $\alpha_1$ gilt ähnliches wie im Fall der Regelung ohne Integralanteil. Ein Wert von $\alpha_1$= 0.2 .... 0.3 stellt eine ähnliche vorteilhafte Wahl dar. Hier muß nun aber auch die Polstelle $\alpha_2$ festgelegt werden. Nach der Festlegung (59) äußert sich diese nicht mehr im Führungsverhalten. Sie tritt aber in der Störübertragungsfunktion entsprechend Gleichung (50) auf und beeinflußt die Ausregelungen von Störungen, die durch die Störgrößenkompensation nicht erfaßt werden. Dieser Dynamik kann günstigerweise mit $\alpha_2 = 0.5 ... 0.8$ ein etwas langsameres Verhalten gegeben werden als der Dynamik der Führungsübertragung.

Allein durch die Vorgabe von $\alpha_1$ und $\alpha_2$ sowie durch die Festlegung (59) liegt jetzt die Dimensionierung der noch freien Reglerparameter fest. Alle Entwurfsgrößen sind somit auf Vorgaben an das Verhalten des geschlossenen Regelkreises zurückgeführt.

Durch die Symmetrie des Asynchronmotors können jeweils die beiden orthogonalen Komponenten von Strömen. Spannungen und Flüssen als Real- und Imaginärteil von komplexen Zeigern aufgefaßt werden. Im Vorangegangenen wurde auch der Reglerentwurf mit komplexer Rechnung durchgeführt. Das hat den Vorteil. daß der eigentlich zwei Regelgrößen enthaltene Regelkreis formal als Eingrößen-Regelkreis behandelt werden kann. Unmittelbare Folge ist jedoch, daß zwangsläufig auch ein in den Komponenten $i_m$, $i_l$ (magnetisierende und drehmomentbildende Komponente des Stromes) symmetrischer Regler entsteht. Ist beabsichtigt, dem Stromregelkreis in der m-Richtung ein anderes Verhalten zu geben als in der I-Richtung, muß die komplexe Rechnung aufgegeben und auf ein reellwertiges Zweigrößensystem übergegangen werden. Die Strecke wird dann durch die Matrix-Gleichung

$$i(k+1) = \Gamma(k)\left(\rho\, i(k) + \tilde{u}(k) + \tilde{e}(k)\right) \tag{61}$$

beschrieben, wobei die Vektoren $\mathbf{i}(k)$, $\tilde{u}(k)$ und $\tilde{e}(k)$ aus den Komponenten

$$i(k) = \begin{bmatrix} i_m(k) \\ i_l(k) \end{bmatrix} \quad , \quad \bar{u}(k) = \begin{bmatrix} \bar{u}_m(k) \\ \bar{u}_l(k) \end{bmatrix} \quad , \quad \tilde{e}(k) = \begin{bmatrix} \bar{e}_m(k) \\ \bar{e}_l(k) \end{bmatrix} \qquad (62)$$

bestehen. Analog zu der Drehung $\gamma(k)$ nach der Gleichung (17) wird hier die Drehung um den Differenzwinkel $\Delta\varphi_{\Psi S}$ durch die reelle (2x2)-Matrix

$$\Gamma(k) := \begin{bmatrix} \cos\Delta\varphi_{\Psi S}(k) & \sin\Delta\varphi_{\Psi S}(k) \\ -\sin\Delta\varphi_{\Psi S}(k) & \cos\Delta\varphi_{\Psi S}(k) \end{bmatrix} \qquad (63)$$

ausgedrückt. Unter der Annahme eines konstanten Verdrehungswinkels $\Delta\varphi_{\Psi S}(k)$ läßt sich die Matrixgleichung (61) in den z.-Bereich transformieren.

$$z\,i(z) = \left( \rho\,i(z) + \tilde{u}(z) + \tilde{e}(z) \right) \quad , \qquad (64)$$

$$\left( z\,I - \rho\,\Gamma \right) i(z) = \Gamma \left( \bar{u}(z) + \bar{e}(z) \right) \qquad (65)$$

$I$ ist die Einheitsmatrix. Hieraus kann die Streckenübertragungsmatrix

$$G_S(z) = (z\,I - \rho\,\Gamma)^{-1}\,\Gamma \qquad (66)$$

abgeleitet werden (vgl. Gleichung 21). Die Reglerstruktur wird zwar entsprechend Fig. 2 beibehalten, doch sind jetzt $\tilde{\kappa}_p, \tilde{\kappa}_l, \tilde{\kappa}_V$ jeweils (2x2)-Matrizen in Form

$$\bar{K} = \begin{bmatrix} \bar{K}_{mm} & \bar{K}_{ml} \\ \bar{K}_{lm} & \bar{K}_{ll} \end{bmatrix} . \qquad (67)$$

Werden die vorangehend benutzten komplexen Reglerparameter der Form

$$\bar{K} = \bar{K}_r + j\bar{K}_i \qquad (68)$$

in diese reelle (2x2)-Darstellung gebracht, ergibt sich

$$\bar{K} = \begin{bmatrix} \bar{K}_r & -\bar{K}_i \\ \bar{K}_i & \bar{K}_r \end{bmatrix} . \qquad (69)$$

Hieran erkennt man deutlich, daß durch die der komplexen Rechnung innewohnende Symmetrie der beiden Zeigerkomponenten eine Reduktion der jeweils vier unabhängig wählbaren Reglerparameter $\tilde{\kappa}_{mm}, \tilde{\kappa}_{ml}, \tilde{\kappa}_{lm}, \tilde{\kappa}_{ll}$ auf nur noch zwei unabhängige Parameter $\tilde{\kappa}_r$ und $\tilde{\kappa}_i$ stattfindet. Die Übertragungsmatrizen für Vorsteuerung und Regler lauten also (vgl. Gleichung (22), (23))

$$G_R = \bar{K}_P + \bar{K}_I \, I \, (z-1)^{-1} \qquad (70)$$

$$G_V = \tilde{K}_V \quad , \qquad (71)$$

mit jeweils 4 unabhängig wählbaren Reglerparametern in den Matrizen $\tilde{\kappa}_P, \tilde{\kappa}_I, \tilde{\kappa}_V$ .

Die Regelkreisgleichung besitzt formal gleiches Aussehen wie in der komplexen Schreibweise entsprechend Gleichung (24);

$$i(z) = G_S(z) \left( \tilde{u}(z) + \tilde{e}(z) \right)$$

$$= G_S(z) \frac{1}{z} \left( \bar{p}(z) + G_V(z) \, i_w(z) + G_R(z) \left( i_w(z) - z\,i(z) \right) \right) + G_S(z) \, \tilde{e}(z) .$$

$$(72)$$

$$\left( I + G_S(z) \, G_R(z) \right) i(z) = \frac{1}{z} G_S(z) \left( G_R(z) + G_V(z) \right) i_w(z) + G_S(z) \left( \tilde{e}(z) + \frac{1}{z} \bar{p}(z) \right)$$

$$(73)$$

Anders als bei der komplexen Rechnung, bei der das multiplikative Kommutativgesetz gilt, dürfen jetzt Faktoren in Produkten nur noch vertauscht werden, wenn sie Skalare sind. Werden $G_S$, $G_R$, $G_V$ nach den Beziehungen (66), (70) und (71) eingesetzt, erhält man

$$\left( I + (zI - \rho\Gamma)^{-1}\Gamma \left( \bar{K}_P + \bar{K}_I \, (z-1)^{-1} \right) i(z) \right.$$

$$= \frac{1}{z} \left( zI - \rho\Gamma \right)^{-1}\Gamma \left( \bar{K}_P + \bar{K}_V + \bar{K}_I \, (z-1)^{-1} \right) i_w(z)$$

$$+ \left( zI - \rho\Gamma \right)^{-1}\Gamma \left( \tilde{e}(z) + \frac{1}{z} \bar{p}(z) \right) \qquad (74)$$

Die Multiplikation der Gleichung (74) von links mit z(z-1) zI-$\rho\Gamma$ ergibt.

$$z \left( z(z-1)\, I \; - \; (z-1)\, \rho\, \Gamma \; + \; (z-1)\Gamma\, \bar{K}_P \; + \; \Gamma\, \bar{K}_I \right) i\,(z)$$

$$= \left( (z-1)\Gamma\, (\bar{K}_P \; + \; \bar{K}_V \; + \; \Gamma\, \bar{K}_I \right) i_w(z)$$

$$+ \; z\,(z-1)\, \Gamma \left( \tilde{e}\,(z) \; + \; \frac{1}{z}\, \bar{p}(z) \right)$$

$$\qquad (75)$$

$$z \left( z^2\, I \; - \; z \left( I \; + \; \rho\Gamma \; - \; \Gamma\tilde{K}_P \right) \; + \; \rho\Gamma \; - \; \Gamma\tilde{K}_P \; + \; \Gamma\tilde{K}_I \right) i(z)$$

$$= \left( z\Gamma\, (\, \bar{K}_P \; + \; \bar{K}_V \,) \; + \; \Gamma \left( \bar{K}_I \; - \; \tilde{K}_P \; - \; \bar{K}_V \right) \right) i_w(z)$$

$$+ z\,(z-1)\, \Gamma \left( \bar{e}(z) \; + \; \frac{1}{z}\bar{p}(z) \right)$$

$$\qquad (76)$$

Das führt nun zu

$$i\,(z) \; = \; T_w(z)\, i_w(z) \; + \; T_e(z) \left( \bar{e}(z) \; + \; \frac{1}{z}\, \bar{p}(z) \right) \qquad (77)$$

mit

$$T_w(z) \; = \; \left[ z \left( z^2\, I \; - \; z \left( I \; + \; \rho\Gamma \; - \; \Gamma\bar{K}_P \right) \; + \; \rho\Gamma \; - \; \Gamma\bar{K}_P \; + \; \Gamma\bar{K}_I \right) \right]^{-1} \cdot$$

$$\left[ z\Gamma\, (\, \bar{K}_P \; + \; \bar{K}_V \,) \; + \; \Gamma \left( \bar{K}_I \; - \; \bar{K}_P \; - \; \bar{K}_V \right) \right] \,, \qquad (78)$$

$$T_e(z) \; = \; \left[ z^2\, I \; - \; z \left( I \; + \; \rho\Gamma \; - \; \Gamma\bar{K}_P \right) \; + \; \rho\Gamma \; - \; \Gamma\bar{K}_P \; + \; \Gamma\bar{K}_I \right]^{-1} (z-1)\, \Gamma \qquad (79)$$

entsprechend den Gleichungen (27) und (28). Die Entkopplungsbedingung stellt sich sich hier so dar, daß jede Koeffizientenmatrix der Polynome in der Führungsübertragungsmatrix $\mathbf{T}_w(z)$ Diagonalmatrix sein muß. Dann besitzt $\mathbf{T}_w(z)$ selbst Diagonalform und die m- und I-Komponenten sind entkoppelt. Sind $\mathbf{K'}_I$, $\mathbf{K'}_V$, $\mathbf{K'}_P$ Diagonalmatrizen der Form

$$K' \; = \; \begin{bmatrix} K'_m & 0 \\ 0 & K'_I \end{bmatrix} \,, \qquad (80)$$

so werden mit

$$\bar{K}_I = \Gamma^T K'_I \quad , \tag{81}$$

$$\bar{K}_P = \rho I + \Gamma^T K'_P \quad , \tag{82}$$

$$\bar{K}_V = - \rho I + \Gamma^T K'_V \tag{83}$$

die Entkopplungsbedingungen erfüllt, wie durch Einsetzen nachgeprüft werden kann (zu beachten ist, daß die Inverse der orthogonalen Matrix $\Gamma$ gleich ihrer Transponierten ist. $\Gamma^{-1} = \Gamma^T$):

$$T_w(z) = \left[ z \left( z^2 I + z (K'_P - I) + K'_I - K'_P \right) \right]^{-1} \left[ z (K'_P + K'_V) + K'_I - K'_P - K'_V \right] \tag{84}$$

Die Diagonal-Führungsübertragungsmatrix $T_w(z)$ kann nun in m- und l-Richtung separiert werden.

$$T_{wm}(z) = \frac{z \left( K'_{Pm} + K'_{Vm} \right) + K'_{Im} - K'_{Pm} - K'_{Vm}}{z \left( z^2 + z (K'_{Pm} - 1) + K'_{Im} - K'_{Pm} \right)} \tag{85}$$

$$T_{wl}(z) = \frac{z \left( K'_{Pl} + K'_{Vl} \right) + K'_{Il} - K'_{Pl} - K'_{Vl}}{z \left( z^2 + z (K'_{Pl} - 1) + K'_{Il} - K'_{Pl} \right)} \tag{86}$$

Diese Führungsübertragungsfunktionen gleichen nun aber der bereits früher hergeleiteten Gleichung (34), nur daß jetzt das Führungsverhalten in m- und l-Richtung separat festgelegt werden kann. Hierfür können die weiter oben durchgeführten Rechnungen über die Festlegung der Pole des Führungsverhaltens herangezogen werden, nur daß dabei zwischen Null- und Polstellen $\alpha_{1m}$, $\alpha_{2m}$, $\beta_{1m}$ der m-Richtung und $\alpha_{1l}$, $\alpha_{2l}$, $\beta_{1l}$ der l-Richtung unterschieden werden muß..

Insbesondere ist es auch möglich, eine Komponente nur als Proportional-Regler und die andere mit einem integralen Anteil zu versehen. Dies kann sinnvoll sein, wenn beispielsweise ein dem Stromregler überlagerter Flußregler zwar bleibende Regelfehler der m-Richtung ausgleicht, aber bei einem drehmoment-gesteuerten Betrieb ein überlagerter integraler Anteil in der l-Richtung fehlt, so daß der $i_l$ - Regler selbst mit einem integralen Anteil versehen werden sollte.

Der zeitdiskrete Regler ermittelt nach den zuvor festgelegten Reglerparametern eine zeitdiskrete Stellgröße

$$\bar{u}(k) = \eta \bar{u}(k) = \eta \overline{u}^v_S(k) \tag{87}$$

in auf den Fluß der Asynchronmaschine bezogenen Koordinaten. Um die tatsächliche Stellgröße zu ermitteln, muß durch eine Drehtransformation wieder auf die Ständerkoordinaten der Asynchronmaschine übergegangen werden:

$$\overline{u}_S^S = \overline{u}_S^{\Psi}(k) \, \exp\!\big(j\varphi_{\Psi S}(k)\big) \quad . \tag{88}$$

Es ist zu beachten, daß der Regler im Intervall k bereits die Stellgrößen für das folgende Intervall k+1 berechnet und folglich für die Drehtransformation der Flußwinkel $\varphi_{\Psi S}$ für den kommenden Zeitpunkt $T_{k+1}$ benötigt wird, welcher aber von dem Flußbeobachter als Prädiktionswert zur Verfügung gestellt wird.

Die zeitdiskrete Stellgröße $\overline{u}_S^S(k)$ muß nun aber in eine zeitkontinuierliche Größe umgesetzt werden. Es ist eine Funktion $u_S^S(t)$ im Intervall $t \, \varepsilon \, (T_k \, T_{k+1})$ zu finden, die $\overline{u}_S^S(k)$ entsprechend Gleichung (11) liefert. Hierbei müssen die möglichen Schaltzustände des mit dem Asynchronmotor verbundenen Wechselrichters berücksichtigt werden. Die Bestimmung von $u_S^S(t)$ nach dem Integral der Gleichung (11) ist jedoch rechentechnisch nicht einfach. Gewöhnlich ist jedoch die Streuzeitkonstante $\tau_\sigma$ groß gegenüber der Abtastzeit, so daß in der Gleichung (11) die Exponentialfunktion $\exp[-(T_{k+1}-t)/\tau_\sigma]$ für $t \, \varepsilon \, (T_k, T_{k+1})$ mit einiger Genauigkeit durch die Konstante 1 angenähert werden kann. Dann wird aus der Gleichung (11):

$$\overline{u}_S^S(k) = \frac{1}{T_{k+1}-T_k} \int_{T_k}^{T_{k+1}} u_S^S(t) \, dt \quad . \tag{89}$$

D. h. Der Mittelwert der zeitkontinuierlichen Spannung $u_S^S(t)$ im Intervall $(T_k, T_{k+1})$ soll gleich $\overline{u}_S^S(k)$ sein. Genau dies ist der Ausgangspunkt für eine entsprechend der DE-Patentanmeldung P 42 41 647.7 betriebene Vektormodulation für die Ansteuerung eines Pulswechselrichters, die die gewünschte Umsetzung eines zeitlich diskreten, aber wertemäßig kontinuierlichen Spannungs-Sollwerts in eine zeitliche Abfolge wertegemäß diskreter Schaltzustände umsetzt.

Nach Gleichung (43) ist für die Störgrößenkompensation im Zeitbereich

$$\tag{90}$$

$$\tilde{p}(k) = -\tilde{e}(k+1) = -\eta\,\overline{e}_S^{\Psi}(k+1) = -\eta\,\overline{e}_S^S(k+1)\,\exp\big(-j\varphi_{\Psi S}(k+1)\big)$$

zu setzen. Die um einen Schritt vorauseilende Störgröße soll vom Flußbeobachter B als Prädiktionswert zur Verfügung gestellt werden. Wie schon zuvor soll auch hier im Zusammenhang über die Gleichung (12) zwischen der zeitkontinuierlichen Störgröße $e_S^S(t)$ und der zeitdiskreten Störgröße $\overline{e}_S^S(k)$ die Exponentialfunktion durch 1 genähert werden. Dadurch erhält man

$$\overline{e}_S^S(k) = \frac{1}{T_{k+2}-T_{k+1}} \int_{T_{k+1}}^{T_{k+2}} e_S^S(t) \, dt = -\frac{1}{T_{k+2}-T_{k+1}} \int_{T_{k+1}}^{T_{k+2}} \left( j\omega_{RS} - \frac{R_R}{L_R} \right) \psi_R^S(t) \, dt \quad . \tag{91}$$

Entsprechend der eingangs getroffenen Voraussetzung wird der Läuferfluß während des Abtastintervalls mit konstantem Betrag und konstanter Drehfrequenz angenommen:

$$\psi_R^S(t) = \psi_R^{\Psi}(k+1) \, \exp j\big(\varphi_{\Psi S}(k+1) + (t-T_{k+1})\,\omega_{\Psi S}\big) \tag{92}$$

Zusammen mit der Beziehung (5) ergibt sich also

$$p(k) = \frac{1}{\eta} \, \bar{p}(k) = \frac{1}{T_{k+2}-T_{k+1}} \int_{T_{k+1}}^{T_{k+2}} \left( j\omega_{RS} - \frac{R_R}{L_R} \right) \psi_R^{\psi}(k+1) \, \exp j\omega_{\psi S}(t-T_{k+1}) \, dt$$

$$= \left( j\omega_{RS} - \frac{R_R}{L_R} \right) \psi_R^{\psi}(k+1) \, \frac{\exp\left( j\omega_{\psi S}(T_{k+2}-T_{k+1}) \right) - 1}{j\omega_{\psi S}(T_{k+2}-T_{k+1})}$$

$$= \left( j\omega_{RS} - \frac{R_R}{L_R} \right) \psi_R^{\psi}(k+1) \, \frac{\exp\left( j\Delta\varphi_{\psi S}(k+1) \right) - 1}{j\Delta\varphi_{\psi S}(k+1)} \qquad (93)$$

Für kleine Winkeldifferenzen $\Delta\varphi_{\psi S}$ kann der rechtsstehende Quotient durch 1 genähert werden. Als eine etwas genauere Näherung kann

$$p(k) \approx \left( j\omega_{RS} - \frac{R_R}{L_R} \right) \psi_R^{\psi}(k+1) \, \exp\left( \frac{j}{2} \Delta\varphi_{\psi S}(k+1) \right) \qquad (94)$$

abgeleitet werden. Da bei größeren Ständerfrequenzen teilweise nur noch mit 6 Abtastungen je Grundschwingungsperiode gearbeitet wird, kann $\Delta\varphi_{\psi S}$ Werte bis zu 60° annehmen. In diesem Fall ist es zweckmäßig, p (k) exakt nach Gleichung (93) zu bestimmen.

Verwendet man hier die Annahme, daß die Streuzeitkonstante groß gegenüber der Abtastzeit ist, darf $\rho$ nach Gleichung (10) durch

$$\rho \approx 1 - \frac{T_{k+1}-T_k}{\tau_\sigma} \qquad (95)$$

ersetzt werden. Werden gleichzeitig die Parameter $K'_I$, $K'_P$, $K'_V$ wieder auf $\tilde{K}_I$, $\tilde{K}_P$, $\tilde{K}_V$ und diese mit $\eta$ nach Gleichung (10) normierten Größen auf die eigentlichen Reglerparameter $K_I$, $K_P$, $K_V$ zurückgeführt, ergeben sich die Gleichungen:

$$K_I = \frac{1}{\eta} \, \bar{K}_I = \frac{L_\sigma}{T_{k+1}-T_k} \, \gamma^1 \, K'_I \qquad (96)$$

$$K_P = \frac{1}{\eta} \, \bar{K}_P = - R_S - R_R + \frac{L_\sigma}{T_{k+1}-T_k} \left( \gamma^1 \, K'_P + 1 \right) \qquad (97)$$

$$K_V = \frac{1}{\eta} \bar{K}_V = R_S + R_R + \frac{L_\sigma}{T_{k+1}-T_k} \left( \gamma^{-1} K_V' - 1 \right) \qquad (98)$$

Beim Übergang von der komplexen Rechnung auf eine reelle Darstellung ist $\gamma^{-1}$ durch die trigonometrischen Funktionen

$$\gamma^{-1} = \cos \Delta\varphi_{\Psi S}(k) + j \sin\Delta\varphi_{\Psi S}(k) \qquad (99)$$

zu ersetzen, so daß z.B. $K_V$ entsprechend Gleichung (68) in

$$K_{Vr} = R_S + R_R + \frac{L_\sigma}{T_{k+1}-T_k} \left( K_V' \cos \Delta\varphi_{\Psi S} - 1 \right) , \qquad (100)$$

$$K_{Vi} = \frac{L_\sigma}{T_{k+1}-T_k} K'_V \sin \Delta\varphi_{\Psi S} \qquad (101)$$

aufgespalten wird. Der weiter oben behandelte asymmetrische Reglerentwurf führt entsprechend (exemplarisch für die Vorsteuerung) zu

$$K_{Vmm} = R_S + R_R + \frac{L_\sigma}{T_{k+1}-T_k} \left( K_{Vm}' \cos \Delta\varphi_{\Psi S} - 1 \right) \qquad (102)$$

$$\dot{K}_{Vll} = R_S + R_R + \frac{L_\sigma}{T_{k+1}-T_k} \left( K_{Vl}' \cos \Delta\varphi_{\Psi S} - 1 \right) \qquad (103)$$

$$K_{Vlm} = \frac{L_\sigma}{T_{k+1}-T_k} K'_{Vm} \sin \Delta\varphi_{\Psi S} \qquad (104)$$

$$K_{Vml} = -\frac{L_\sigma}{T_{k+1}-T_k} K'_{Vl} \sin \Delta\varphi_{\Psi S} \qquad (105)$$

Entsprechendes gilt für $K_P$ und $K_I$.

Die in Fig. 1 gezeigte Regelungsstruktur verwendet einen Strsomprädiktor, der aus

- dem zu einem bestimmten Zeitpunkt (k) erfaßten Stromistwert i (k),
- der zu dem bestimmten Zeitpunkt (k) vorhandenen Stellgröße $\tilde{u}$ (k) für den Wechselrichter und
- der ein Zeittaktintervall vor dem bestimmten Zeitpunkt (k) vorhandenen Meßwert der Stellgröße $\tilde{u}$ (k-1) des Wechselrichters

den nach einem an den bestimmten Zeitpunkt (k) anschließenden Zeittaktintervall (k+1) fließenden Strom i (k+1) durch einen Schätzwert î (k+1) möglichst genau vorausbestimmt.

Da bei den prädizierten Stromwerten im allgemeinen mit Prädiktionsfehlern zu rechnen ist, die in Gleichung (20) zunächst nicht berücksichtigt worden sind, werden bei Verwendung der Struktur nach Fig. 1 stationäre Prädiktionsfehler gerade als stationäre Regelfehler auftreten, da der I-Anteil des Reglers Sollwerte mit den Prädiktionswerten vergleicht.

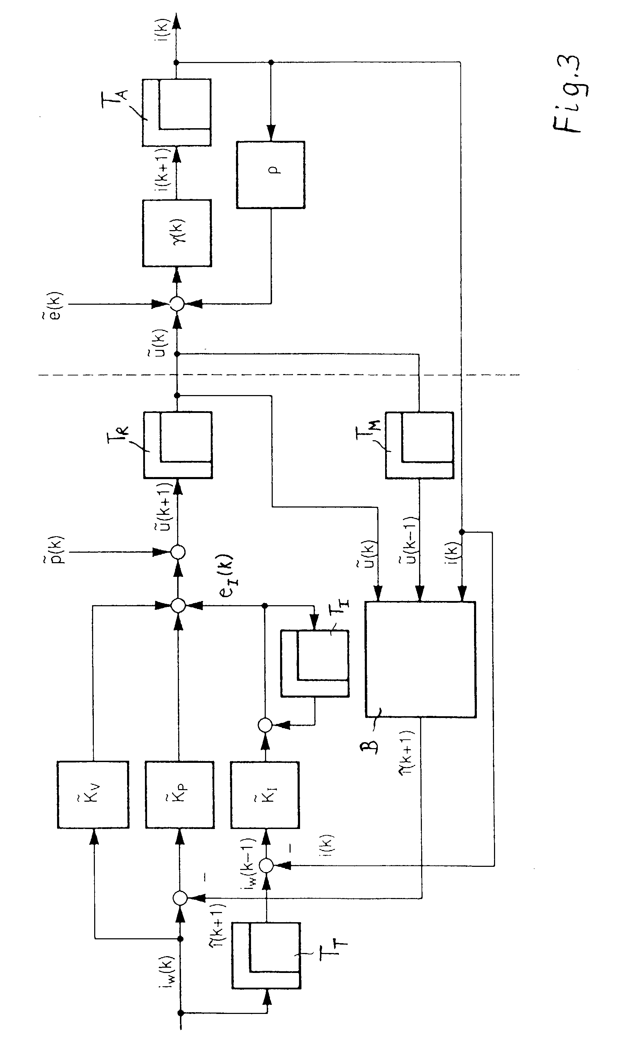

Fig. 3 zeigt eine Struktur des Stromregelkreises in Flußorientierung zur Vermeidung der angesprochenen stationären Regelfehler aufgrund von Prädiktionsfehlern.

Dabei dient entsprechend der Struktur nach Fig. 1 der vom Prädiktor im Flußbeobachter B prädizierte Strom î (k+1) dern Regler für den Proportionalanteil als Regelgröße zum Vergleich mit dem zu dem bestimmten Zeitpunkt (k) vorgegebenen Sollwert $i_w$ (k) des Stromes. Hier jedoch wird dem Regler für den Integralanteil in Abweichung von der Konzeption nach Fig. 1 der zu dem bestimmten Zeitpunkt (k) erfaßte Stromistwert i (k) als Regelgröße zum Vergleich mit einer Führungsgröße zugeführt, die dem vorgegebenen Sollwert $i_w$ (k-1) des Stromes zu einem Zeitpunkt ein Zeittaktinvertall vor dem bestimmten Zeitpunkt (k) entspricht (realisiert durch das Zeitelement $T_T$). Zur Bestimmung des Vorsteuerungsanteils und für den P-Anteil dient dem Regler weiterhin der zu dem bestimmten Zeitpunkt (k) vorgegebene Sollwert $i_w$(k) des Stromes.

In der Struktur nach Fig. 3 verarbeitet also nur noch für die beabsichtigte hohe Dynamik der P-Anteil den Prädiktionswert, während für den I-Anteil von dem nicht-prädizierten Istwert ausgegangen wird. Bei idealer Prädiktion sind beide Strukturen natürlich äquivalent.

## Patentansprüche

1. Verfahren zur zeitdiskreten Regelung des Stroms eines über einen Wechselrichter gespeisten Asynchronmotors in läuferflußbezogenen Komponenten mit einer taktweisen Sollwertvorgabe des Stroms, einer im gleichen Zeittakt abtastenden Istwerterfassung des Stroms und Istwertaufbereitung und einer durch die Regelung im gleichen Zeittakt bereitgestellten Stellgröße für den Wechselrichter,

   **dadurch gekennzeichnet**,

   daß ein Regler eingesetzt wird, der mit einem prädizierten Stromistwert gespeist wird und der dem Reglergesetz

$$\bar{u}(k+1) \ = \ \frac{L_\sigma}{T_{k+2} \ - \ T_{k+1}} \ \tilde{u}(k+1)$$

$$\tilde{u}(k+1) \ = \ \bar{K}_V(k) \ i_w(k) \ + \ \bar{K}_P(k)(i_w(k) \ - \ \hat{i}(k+1)) \ + \ e_I(k) \ + \ \tilde{p}(k)$$

$$e_I(k+1) \ = \ e_I(k) \ + \ \bar{K}_I(k)(i_w(k) \ - \ \hat{i}(k+1))$$

   folgt, wobei

   | | |
   |---|---|
   | $\tilde{u}$ (k+1) | eine normierte Reglerstellgröße des nächstfolgenden Zeittaktes, |
   | $\bar{u}$ (k+1) | der Spannungssollwert für das nächstfolgende Zeitintervall k+1, wobei $L_\sigma$ die Streuinduktivität des Motors ist und $T_{k+1}$, $T_{k+2}$ Anfangs- und Endzeitpunkt des k+1-Intervalls bezeichnen, |
   | $\tilde{p}$ (k) | eine Störgrößenkompensation, |
   | $\hat{i}_W$ (k) | der Stromsollwert, |
   | î (k+1) | ein durch einen Prädiktor um einen Schritt vorauseilender Schätzwert des Stromistwerts für den Zeitpunkt t = $T_{k+1}$, |
   | $e_I$ (k) | die integrale Regelabweichung |

   sind und diese Größen jeweils aus zwei Elementen entsprechend einer orthogonalen läuferflußbezogenen Darstellung von zweidimensionalen Vektoren (m- und I-Komponenten) bestehen, während die Größen $\bar{K}_V$ (k), $\bar{K}_{P'}$(k), $\bar{K}_I$ (k) jeweils im allgemeinen aus 4 Elementen bestehende, in einer (2X2)-Matrix angeordnete Regelparameter sind, die die Verstärkungen der Sollwertaussteuerung, der Proportional- und der Integralverstärkung des Reglers angeben.

2. Verfahren nach Anspruch 1,

   **dadurch gekennzeichnet**,

   daß der integrale Regelfehler nicht mit dem Stromprädiktionswert, sondern mit dem flußorientierten Stromistwert

i(k) nach

$$e_1(k) = e_1(k\text{-}1) + \bar{K}_1(k)\ (i_w\ (k\text{-}1) - i(k))$$

gebildet wird.

3. Verfahren nach Anspruch 1 oder 2,
**dadurch gekennzeichnet,**
daß zur Entkopplung der beiden Komponenten des läuferflußbezogenen Stromregelkreises die Reglerparameter

$$\bar{K}_1(k) = \Gamma^T K_1'$$

$$\bar{K}_P(k) = \rho I + \Gamma^T K_P'$$

$$\tilde{K}_V(k) = -\rho I + \Gamma^T K_V'$$

gewählt werden, wobei $K_1'$, $K_V'$, $K_P'$ Diagonalmatrizen sind, I die (2X2)-Einheitsmatrix ist,

$$\Gamma(k) = \begin{bmatrix} \cos\Delta\varphi_{\psi S}(k) & \sin\Delta\varphi_{\psi S}(k) \\ -\sin\Delta\varphi_{\psi S}(k) & \cos\Delta\varphi_{\psi S}(k) \end{bmatrix}$$

mit $\Delta\varphi_{\psi S}(k)=\varphi_{\psi S}(k+1) - \varphi_{\psi S}(k)$, wobei $\varphi_{\psi S}(k)$ der Winkel des Läuferflusses gemessen vom Ständersystem zum Abtastzeitpunkt $t = T_k$ ist, und mit $R_S$ und $R_R$ als Ständer- und Läuferwiderstand des Asynchronmotors

$$\rho(k) = \exp\left(- (T_{k+1}-T_k)\ \frac{R_S + R_R}{L_\sigma}\right)$$

ist.

4. Verfahren nach Anspruch 3,
**dadurch gekennzeichnet,**
daß $\rho$ (k) durch

$$\rho(k) = 1 - (T_{k+1} - T_k)\frac{R_S + R_R}{L_\sigma}$$

genähert wird.

5. Verfahren nach Anspruch 3 oder 4,
**dadurch gekennzeichnet,**
daß für die Diagonalelemente in den Diagonalmatrizen $K_1'$, $K_V'$, $K_P'$

$$K_{1j}' = 0$$

$$K'_{vj} = 1$$

$$K'_{Pj} = -\alpha_{1j}$$

gewählt wird (j = m, l), wobei $\alpha_{1j}$ unmittelbar das Einschwingverhalten des geschlossenen Regelkreises bestimmt und aus dem Wertebereich (0, 1) gewählt wird.

6. Verfahren nach Anspruch 5,
   **dadurch gekennzeichnet,**
   daß für Dead-Beat-Verhalten $\alpha_{1j} = 0$ gewählt wird.

7. Verfahren nach Anspruch 5 oder 6,
   **dadurch gekennzeichnet,**
   daß für beide Komponenten j = m, l unterschiedliche $\alpha_{1j}$ vorgegeben werden.

8. Verfahren nach Anspruch 3 oder 4,
   **dadurch gekennzeichnet,**
   daß für die Diagonalelemente $K'_I$, $K'_V$, $K'_P$

$$K'_{Ij} = (1 - \alpha_{1j})(1 - \alpha_{2j})$$

$$K'_{Pj} = 1 - \alpha_{1j} - \alpha_{2j}$$

$$K'_{Vj} = \frac{(1 - \alpha_{1j})(1 - \alpha_{2j})}{1 - \beta_{1j}} + \alpha_{1j} + \alpha_{2j} - 1$$

gewählt wird (j = m, l), wobei $\alpha_{1j}$ und $\alpha_{2j}$ die Polstellen und $\beta_{1j}$ die Nullstellen des geschlossenen Regelkreises charakterisieren, die direkt vorgegeben werden, und $\alpha_{1j}$ und $\alpha_{2j}$ aus dem Wertebereich (0, 1) gewählt werden.

9. Verfahren nach Anspruch 8,
   **dadurch gekennzeichnet,** daß

$$\beta_{1j} = \alpha_{2j}$$

gewählt wird.

10. Verfahren nach einem der Ansprüche 5 bis 9,
    **dadurch gekennzeichnet,**
    daß nur für eine Komponente die Stromreglerparameter entsprechend Anspruch 5 gewählt und für die andere Komponente die Stromreglerparameter entsprechend den Ansprüchen 8 oder 9 gewählt werden.

11. Verfahren nach einem der Ansprüche 1 bis 10,
    **dadurch gekennzeichnet,**
    daß für die Störgrößenkompensation

$$\frac{T_{k+2} - T_{k-1}}{L_\sigma} \left( j\omega_{RS} - \frac{R_R}{L_R} \right) \hat{\psi}^\Psi_R(k+1) \frac{\exp\left(j\Delta\varphi_{\psi S}(k+1)\right) - 1}{j\Delta\varphi_{\psi S}(k+1)}$$

gewählt wird, wobei sich die beiden Komponenten der Störgrößenkompensation $\rho(k)$ aus dem Real- und dem Imaginärteil des obigen Terms ergeben, und $\omega_{RS}$ die auf das elektrische (mehrpolige) System umgerechnete mechanische Winkelgeschwindigkeit des Motors, $\hat{\psi}^{\Psi}_R(k+1)$ ein Schätzwert des Betrags des Läuferflusses zum Zeitpunkt k+1, $\Delta\varphi_{\Psi S}$ ein Differenzwinkel (wie in Anspruch 3) und $L_R$ die Läuferinduktivität des Motors sind.

**12.** Verfahren nach Anspruch 11,
**dadurch gekennzeichnet,**
daß die Größen für die Störgrößenkompensation von einem prädizierenden Beobachtersystem zur Verfügung gestellt werden.

**13.** Verfahren nach Anspruch 11 oder 12,
**dadurch gekennzeichnet,**
daß die Störgrößenkompensation durch

$$\frac{T_{k+2} - T_{k-1}}{L_\sigma} \left( j\omega_{RS} - \frac{R_R}{L_R} \right) \hat{\psi}^{\Psi}_R(k+1) \ \exp\left( \frac{j}{2}\Delta\varphi_{\Psi S}(k+1) \right)$$

genähert wird.

**Claims**

1. Method for the regulation discretely in time of the current of an asynchronous motor, which is fed by way of a DC/AC converter, in components referred to rotor flux with a cyclical target value presetting of the current, an actual value detection, which scans in the same time cycle, of the current and actual value preparation and a setting magnitude, which is placed ready by the regulation in the same time cycle for the DC/AC converter, characterised thereby, that a regulator is used, which is fed by a predicted actual current value and follows the regulator law

$$\overline{u}(k+1) = \frac{L_\sigma}{T_{k+2} - T_{k+1}} \ \tilde{u}(k+1)$$

$$\tilde{u}(k+1) = \tilde{K}_v(k) \ i_w(k) + \tilde{K}_P(k)(i_w(k) - \hat{i}(k+1)) + e_I(k) + \tilde{p}(k)$$

$$e_I(k+1) = e_I(k) + \tilde{K}_I(k)(i_w(k) - \hat{i}(k+1)) ,$$

wherein

$\tilde{u}(k+1)$    is a normalised regulator setting magnitude of the next following time cycle,
$\tilde{u}(k+1)$    is the target voltage value for the next following time interval k+1, wherein $L_\sigma$ is the stray inductance of the motor and $T_{k+1}$ and $T_{k+2}$ respectively denote the initial and final instant of the interval k+1,
$\tilde{p}(k)$    is a disturbance variable compensation,
$i_w(k)$    is the target current value,
$\hat{i}(k+1)$    is an estimated value, which due to a predictor leads by one step, of the actual current value for the instant $t = T_{k+1}$ and
$e_I(k)$    is the integral regulating deviation

and these magnitudes each consist of two respective elements corresponding to an orthogonal representation, which is referred to rotor flux, of two-dimensional vectors (m and l components), whilst the magnitudes $\tilde{K}_v(k), \tilde{K}_P(k)$ and $\tilde{K}_I(k)$ are each regulating parameters which are arranged in (2x2) matrix, in general consist of 4 respective elements and indicate the amplifications of the target value swing, and the proportional and integral amplification of the regulator.

2. Method according to claim 1, characterised thereby, that the integral regulation error is not formed by the current prediction value, but by the flux-oriented actual current value i(k) according to

$$e_I(k) = e_I(k\text{-}1) + \widetilde{K}_I(k)\,(i_W(k\text{-}1) - i(k))\,.$$

3. Method according to claim 1 or 2, characterised thereby, that the regulator parameters

$$\widetilde{K}_I(k) = \Gamma^T K'_I$$

$$\widetilde{K}_P(k) = \rho I + \Gamma^T K'_P$$

$$\widetilde{K}_V(k) = -\rho I + \Gamma^T K'_V$$

are chosen for the neutralisation of the two components of the current-regulating circuit referred to rotor flux, wherein $K'_I$, $K'_V$ and $K'_P$ are diagonal matrices, I is the (2x2) unit matrix,

$$\Gamma(k) = \begin{bmatrix} \cos \Delta\varphi_{\psi s}(k) & \sin \Delta\varphi_{\psi s}(k) \\ -\sin \Delta\varphi_{\psi s}(k) & \cos \Delta\varphi_{\psi s}(k) \end{bmatrix}$$

with $\Delta\varphi_{\psi s}(k) = \varphi_{\psi s}(k+1) - \varphi_{\psi s}(k)$, wherein $\varphi_{\psi s}(k)$ is the angle of the rotor flux measured from the stator system at the scanning instant $t = T_K$ and, with $R_S$ and $R_R$ respectively as stator and rotor impedance of the asynchronous motor,

$$\rho(k) = \exp\left(-\,(T_{k+1} - T_k)\,\frac{R_S + R_R}{L_\sigma}\right)\,.$$

4. Method according to claim 3, characterised thereby, that $\rho(k)$ is approximated by

$$\rho(k) = 1 - (T_{k+1} - T_k)\,\frac{R_S + R_R}{L_\sigma}\,.$$

5. Method according to claim 3 or 4, characterised thereby, that

$$K'_{Ij} = 0$$

$$K'_{Vj} = 1$$

$$K'_{Pj} = \alpha_{1j}$$

are chosen (j = m, l) for the diagonal elements in the diagonal matrices K'$_I$, K'$_V$ and K'$_P$, wherein $\alpha_{1j}$ directly determines the transient behaviour of the closed regulating loop and is chosen from the value range (0, 1).

**6.** Method according to claim 5, characterised thereby, that $\alpha_{1j}$ = 0 is chosen for deadbeat behaviour.

**7.** Method according to claim 5 or 6, characterised thereby, that different $\alpha_{1j}$ are preset for both components j = m, l.

**8.** Method according to claim 3 or 4, characterised thereby, that

$$K_{Ij}^{'} = (1 - \alpha_{1j})(1 - \alpha_{2j})$$

$$K_{Pj}^{'} = 1 - \alpha_{1j} - \alpha_{2j}$$

$$K_{Vj}^{'} = \frac{(1 - \alpha_{1j})(1 - \alpha_{2j})}{1 - \beta_{1j}} + \alpha_{1j} + \alpha_{2j} - 1$$

are chosen (j = m, l) for the diagonal elements K'$_I$, K'$_V$ and K'$_P$, wherein $\alpha_{1j}$ and $\alpha_{2j}$ characterise the pole points and $\beta_{1j}$ characterises the zero points of the closed regulating loop, which are preset directly, and $\alpha_{1j}$ and $\alpha_{2j}$ are chosen from the value range (0, 1).

**9.** Method according to claim 8, characterised thereby, that $\beta_{1j}$ is chosen to be equal to $\alpha_{2j}$.

**10.** Method according to one of the claims 5 to 9, characterised thereby, that the current-regulating parameters according to claim 5 are chosen for only one component and the current-regulating parameters according to the claims 8 or 9 are chosen for the other component.

**11.** Method according to one of the claims 1 to 10, characterised thereby, that

$$\frac{T_{k+2} - T_{k+1}}{L_\sigma} \left( j\omega_{RS} - \frac{R_R}{L_R} \right) \hat{\psi}_R^{\vee}(k+1) \; \frac{\exp\left( j\Delta\varphi_{\psi S}\,(k+1) \right) - 1}{j\Delta\varphi_{\psi S}\,(k+1)}$$

is chosen for the disturbance magnitude compensation, wherein both components of the disturbance magnitude compensation $\rho(k)$ result from the real part and the imaginary part of the above term, $\omega_{RS}$ is the mechanical angular speed of the motor converted to the electrical (multipole) system, $\hat{\psi}_R(k+1)$ is an estimated value of the magnitude of the rotor flux at the instant k+1, $\Delta\varphi_{\psi S}$ is a difference angle (as in claim 3) and L$_R$ is the rotor inductance of the motor.

**12.** Method according to claim 11, characterised thereby, that the magnitudes for the disturbance magnitude compensation are made available by a predicting observer system.

**13.** Method according to claim 11 or 12, characterised thereby, that the disturbance magnitude compensation is approximated by

$$\frac{T_{k+2} - T_{k+1}}{L_\sigma} \left( j\omega_{RS} - \frac{R_R}{L_R} \right) \hat{\psi}_R^{\vee}(k+1) \; \exp\left( \frac{j}{2}\Delta\varphi_{\psi S}\,(k+1) \right).$$

## Revendications

1. Procédé de régulation temporellement discrète du courant d'un moteur asynchrone alimenté par l'intermédiaire d'un onduleur en composantes rapportées au flux du rotor, comportant une prescription impulsionnelle de la valeur de consigne du courant, une détection de la valeur réelle du courant et une préparation de la valeur réelle par analyse durant la même période et une grandeur de réglage pour l'onduleur préparée par la régulation durant la même période, caractérisé en ce qu'un régulateur est utilisé, qui est alimenté par une valeur réelle de courant prédite et qui obéit à la loi de régulation

$$\overline{u}(k + 1) = \frac{L_\sigma}{T_{k+2} - T_{k+1}} \tilde{u}(k + 1)$$

$$\tilde{u}(k + 1) = \tilde{K}_v(k)i_w(k) + \tilde{K}_P(k)(i_w(k) - \hat{i}(k + 1)) + e_I(k) + \tilde{p}(k)$$

$$e_I(k + 1) = e_I(k) + \tilde{K}_I(k)(i_w(k) - \hat{i}(k + 1))$$

$\iota(k + 1)$ étant une valeur de réglage de régulation normée de la période suivante
$\overline{u}(k + 1)$ étant la valeur de consigne de la tension pour l'intervalle de temps suivant k+1, $L_\sigma$ étant l'inductance de fuite du moteur et $T_{k+1}$, $T_{k+2}$, désignant le début et la fin de l'intervalle k+1,
$\tilde{p}(k)$ étant une compensation de grandeur parasite,
$i_w(k)$ étant la valeur de consigne du courant,
$\hat{i}(k + 1)$ étant une valeur estimée par un prédicteur en avance d'un pas de la valeur réelle du courant pour l'instant $t = T_{k+1}$,
$e_I(k)$ étant l'écart intégral de régulation

et ces grandeurs se composant respectivement de deux éléments correspondant à une représentation rapportée au flux du rotor orthogonale de vecteurs bidimensionnels (composantes m et l), tandis que les grandeurs $\tilde{K}_v$ (k), $\tilde{K}_P$ (k), $\tilde{K}_I$ (k) se composant en général respectivement de 4 éléments, étant des paramètres de régulation disposés dans une matrice (2x2) qui désignent les amplifications de la commande de la valeur de consigne, de l'amplification proportionnelle et intégrale du régulateur.

2. Procédé selon la revendication 1, caractérisé en ce que l'erreur de régulation intégrale n'est pas formée par la valeur de prédiction de courant, mais par la valeur réelle de courant i(k) orientée en flux selon

$$e_I(k) = e_I(k - 1) + \tilde{K}_I(k)(i_w(k - 1) - i(k))$$

3. Procédé selon la revendication 1 ou 2, caractérisé en ce qu'en vue du découplage des deux composantes du circuit de régulation de courant rapporté au flux du rotor, les paramètres de régulation

$$\tilde{K}_I(k) = \Gamma^T K_I'$$

$$\tilde{K}_P(k) = \rho 1 + \Gamma^T K_P'$$

$$\tilde{K}_v(k) = -\rho 1 + \Gamma^T K_v'$$

sont choisis, $K_I'$, $K_v'$, $K_P'$ étant des matrices diagonales, l est la matrice unité (2x2),

$$\Gamma(k) = \begin{bmatrix} \cos \Delta\varphi_{\psi S}(k) & \sin \Delta\varphi_{\psi S}(k) \\ -\sin \Delta\varphi_{\psi S}(k) & \cos \Delta\varphi_{\psi S}(k) \end{bmatrix}$$

avec $\Delta\varphi_{\psi S}(k) = \varphi_{\psi S}(k+1) - \varphi_{\psi S}(k)$, $\varphi_{\psi S}(k)$ étant l'angle du flux du rotor mesuré par le système du rotor à l'instant d'analyse $t = T_k$, et avec $R_S$ et $R_R$ en tant que résistance du stator et résistance du moteur asynchrone

$$\rho(k) = \exp\left(-(T_{k+1} - T_k)\frac{R_S + R_R}{L_\sigma}\right)$$

4. Procédé selon la revendication 3, caractérisé en ce que $\rho(k)$ est approché par

$$\rho(k) = 1 - (T_{k+1} - T_k)\frac{R_S + R_R}{L_\sigma}$$

5. Procédé selon la revendication 3 ou 4, caractérisé en ce que pour les éléments diagonaux dans les matrices diagonales $K_I'$, $K_V'$, $K_P'$

$$K_{Ij}' = 0$$

$$K_{Vj}' = 1$$

$$K_{Pj}' = -\alpha_{1j}$$

($j = m, 1$) est choisi, $\alpha_{1j}$ déterminant directement le comportement transitoire du circuit de régulation fermé et étant choisi dans la plage de valeurs $(0, 1)$.

6. Procédé selon la revendication 5, caractérisé en ce que pour le comportement apériodique, $\alpha_{1j} = 0$ est choisi.

7. Procédé selon la revendication 5 ou 6, caractérisé en ce que pour les deux composantes $j = m, 1$, différents $\alpha_{1j}$ sont prédéterminés.

8. Procédé selon la revendication 3 ou 4, caractérisé en ce que pour les éléments diagonaux $K_P'$, $K_V'$, $K_P'$

$$K_{Ij}' = (1 - \alpha_{1j})(1 - \alpha_{2j})$$

$$K_{Pj}' = 1 - \alpha_{1j} - \alpha_{2j}$$

$$K_{Vj}' = \frac{(1 - \alpha_{1j})(1 - \alpha_{2j})}{1 - \beta_{1j}} + \alpha_{1j} + \alpha_{2j} - 1$$

($j = m, 1$) est choisi, $\alpha_{1j}$ et $\alpha_{2j}$ caractérisant les points polaires et $\beta_{1j}$ les points zéro du circuit de régulation fermé qui sont prédéterminés directement et $\alpha_{1j}$ et $\alpha_{2j}$ étant choisis dans la plage de valeurs $(0, 1)$.

**9.** Procédé selon la revendication 8, caractérisé en ce que $\beta_{1j} = \alpha_{2j}$ est choisi.

**10.** Procédé selon l'une quelconque des revendications 5 à 9, caractérisé en ce que seulement pour une composante, les paramètres de régulation de courant sont choisis selon la revendication 5 et pour l'autre composante, sont choisis les paramètres de régulation de courant correspondant aux revendications 8 ou 9.

**11.** Procédé selon l'une quelconque des revendications 1 à 10, caractérisé en ce que, pour la compensation de grandeurs parasites est choisi

$$\frac{T_{k+2} - T_{k+1}}{L_\sigma} \left( j\omega_{RS} - \frac{R_R}{R_S} \right) \hat{\psi}_R^\psi(k+1) \frac{\exp\left(j\Delta\varphi_{\psi s}(k+1)\right) - 1}{j\Delta\varphi_{\psi s}(k+1)}$$

les deux composantes de la compensation de grandeurs parasites $\rho(k)$ provenant de la partie réelle et de la partie imaginaire du terme ci-dessus, et $\omega_{RS}$ étant la pulsation mécanique du moteur convertie dans le système électrique (multipolaire), $\hat{\psi}_R^\psi(k+1)$ étant une valeur estimée du montant du flux du rotor à l'instant k+1, $\Delta\varphi_{\psi s}$ un angle de différence (comme dans la revendication 3) et $L_R$ l'inductance du rotor du moteur.

**12.** Procédé selon la revendication 11, caractérisé en ce que les grandeurs en vue de la compensation de grandeurs parasites sont obtenues d'un système observateur de prédiction.

**13.** Procédé selon la revendication 11 ou 12, caractérisé en ce que la compensation de grandeurs parasites est approchée par

$$\frac{T_{k+2} - T_{k+1}}{L_\sigma} \left( j\omega_{RS} - \frac{R_R}{R_S} \right) \hat{\psi}_R^\psi(k+1) \exp\left(\frac{j}{2} \Delta\varphi_{\psi s}(k+1)\right)$$

Fig. 1

Fig.2

Fig.3

EP 0 617 504 B1